# EUROPEAN PATENT SPECIFICATION

(11) **EP 1 446 949 B1**
(45) Date of publication and mention of the grant of the patent: **11.10.2006**
(21) Application number: 01274743.2
(22) Date of filing: 23.11.2001
(51) Int. Cl.: H04N 7/14, H04N 7/173

(54) **TELEVISION CHAT ROOM**
FERNSEHPLAUDERZIMMER
FORUM DE DISCUSSION EN TEMPS REEL A L'AIDE D'UN POSTE DE TELEVISION

(43) Date of publication of application: 18.08.2004
(73) Proprietor: Nokia Corporation, 02150 Espoo (FI)
(72) Inventor: DAVIDSSON, Marcus, S-58224 Linkoping (SE); WILLSTEDT, Charlotta, S-21213 Malmo (SE); NILSSON, Gunnar, S-58731 Linkoping (SE); SEGERBERG, Tomas, D-10178 Berlin (DE)
(74) Representative: Derry, Paul Stefan
(86) International application number: PCT/EP2001/014281
(87) International publication number: WO 2003/045058

(56) References cited:
- EP-A- 1 111 926
- WO-A-98/21664
- US-A- 5 880 731

## Description

The present invention relates generally to an entertainment system, and more specifically to concurrent viewing of video programming and of text communications between viewers of the video programming. Still, more particularly, the invention concerns a graphical chat user interface.

A chat room allows users to communicate on-line with other computer or set-top box users, typically over the Internet. Chat rooms are often named after discussion topics in order to facilitate for users to enter a chat room where the discussion pertains to their desired topic. Client software such as e.g. Internet Relay Chat (IRC) or America Online 4.0 features a text window that displays each message submitted by users visiting the room. These user interfaces provide controls for entering a message and submitting entered messages to the server system.

Early on it was necessary to have a computer and a television set in the same room in order to chat about a certain television show and watch the show simultaneously. Later developments made it possible to watch television on a computer equipped with a television card or to chat on a television set with the help of an Internet enabled set-top box. An Internet enabled set-top box essentially has the same components as a general purpose computer except that it also includes a television tuner for receiving broadcast (satellite or terrestrial) and/or cable television signals.
While graphical chat user interfaces for computer chat rooms have developed into virtual three dimensional worlds where users can move around television chat rooms have retained a less advanced structure consisting mainly of dividing the display into one television area and one chat area.

U.S. Patent No. 5,694,163 discloses a computer program for viewing of chat over associated data provided by way of on-line computer services in conjunction with a broadcast television program. A chat is formatted to provide a television compatible chat TV signal, which is inserted into a television program TV signal and broadcast. The encoded TV signal is received by a computer and separated into an audio/visual portion and an encoded data portion. Viewers who do not desire to participate in the chat, or do not have the capability of participating in the chat, are allowed to view the conversations of the chat at the time of viewing the related television program. Another aspect of the invention provides a telephone back channel at a user's computer that allows connection to an on-line service provider via the computer's modem.

U.S. Patent No. 5,880,731 discloses a method for communicating a gesture by an avatar that represents a participant in an on-line graphic chat session. Each participant in the chat session is enabled to select one of a plurality of different avatars to represent the participant in a graphic chat session. Associated with each avatar is a bitmap file that includes a plurality of frames illustrating the avatar in different poses, actions, and emotional states. Selected frames are displayed in rapid sequence in accord with a script file to create an animation effecting each gesture.

PCT Patent Publication No. WO 00/64150 discloses a method for linking chat rooms and television viewing. A video signal, such as a television program, is received and displayed to a viewer. The system has a user-selectable chat option. A transcript of the text messages from all of the viewers who have selected the chat option is displayed to all such viewers. The video signal is simultaneously displayed on a graphical user interface having a video region for display of the video signal and a chat region for display of the transcript of text messages.

PCT Patent Publication No. WO 01/50753 discloses a method of assigning a user to a network chat room. The method includes determining television programming viewed by a network user at a networked device and assigning the network user to a chat room corresponding to the determined television programming. The television programming identification may be a channel number, a television network identifier, and/or an identifier of a particular television program.

PCT Patent Publication No. WO 01/50753 further discloses a TV-enhanced buddy list. The user can define a list of server system user names. In addition to showing whether users on the list are currently logged on to the server, the enhanced buddy list shows the TV show or network each listed buddy is watching. By selecting a link, a user can watch the same show that a friend is watching.

The object of the present invention is to provide a method, a system and a computer program product for concurrent viewing of video programming and of text communications between viewers of video programming. Various implementations of the invention may include one or more of the following features.

A method for providing a graphical chat user interface on a display associated with a multimedia apparatus, comprising the steps of: receiving a broadcast video signal; receiving text communications from at least one other television viewer; displaying said broadcast video signal in a first display area on said display; determining the identity of the television programming displayed in said first display area; determining the theme of said television programming identity; selecting a background image from an image database, said background image matching said theme; inserting said background image as a background in a second display area on said display; and superimposing said text communications on top of said background image in said second display area.

A multimedia apparatus comprising a first receiving means for receiving a broadcast video signal, a second receiving means for receiving text communications originating from a plurality of multimedia apparatuses, and for receiving a plurality of images, a memory means for storing said plurality of images, a determination means for determining the identity of the television programming tuned to by said first receiving means, and for determining the theme of said television programming identity, a display means for displaying said broadcast video signal in a first display area, for displaying a background image, retrieved from said memory means and matching said theme, in a second display area, and for displaying said text communications superimposed on said background image in said second display area.

A computer program product, disposed on a computer readable storage medium, comprising computer readable program code means for causing a computer to perform the method of claim 1.

Other objects and features of the present invention will become apparent from the following detailed description considered in conjunction with the accompanying drawings. It is to be understood, however, that the drawings are designed solely for purposes of illustration and not as definition of the limits of the invention, for which reference should be made to the appended claims. It should be further understood that the drawings are not necessarily drawn to scale and that, unless otherwise indicated, they are merely intended to conceptually illustrate the structures and procedures described herein.

In the drawings, wherein like reference characters denote similar elements throughout the several views:
Figure 1 is a schematic view of a multimedia system for use in accordance with the present invention.
Figure 2 is a schematic block diagram of the multimedia apparatus shown in Figure 1.
Figure 3 is a schematic view of a user interface according to the present invention, illustrating a text communications superimposed on a background image that matches the theme of the displayed television program.
Figure 4 is a schematic view of a user interface according to the present invention, illustrating avatar images, text communications and actions images.
Figure 5 is a schematic view of a user interface according to the present invention, illustrating a main section and a VIP section.

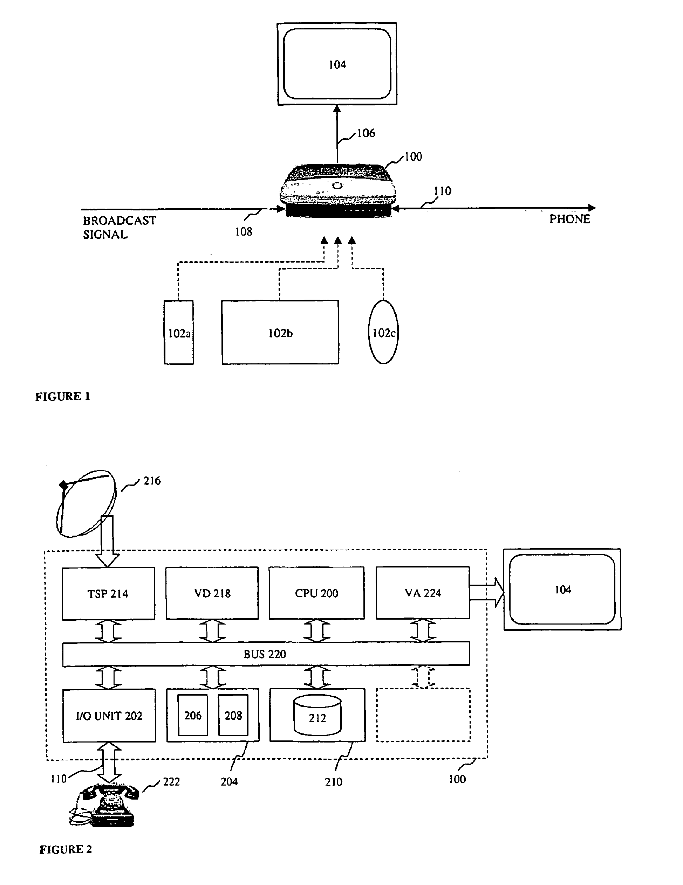

Figure 1 depicts a multimedia apparatus 100 which is part of a client system. The multimedia apparatus 100 can be a set-top box, a computer or an electronics unit built into a television set. The multimedia apparatus 100 receives user input from either a remote control 102a, a keyboard 102b, a mouse 102c or any combination thereof. A display 104, such as a television set or a computer monitor is connected to the multimedia apparatus 100, via a communications link 106, and used for displaying video data and a graphical user interface as well as emitting and audio data. The multimedia apparatus 100 includes hardware and/or software for receiving and decoding a broadcast video signal 108. The broadcast video signal 108 may be broadcast via satellite, cable or terrestrial means. The multimedia apparatus 100 may include a modem and/or other equipment such that a bi-directional communications link 110 can be established for telephone, ISDN or Ethernet connections.

The user controls television viewing and other features of the multimedia apparatus 100 with the remote control 102a. The remote control 102a typically includes a keyboard but there may also be a stand-alone keyboard 102b. A user can enter text data through either of these input means. Optionally, a mouse 102c could be used in combination with a virtual keyboard represented on the display 104. The multimedia apparatus receives power through a power line (not shown).

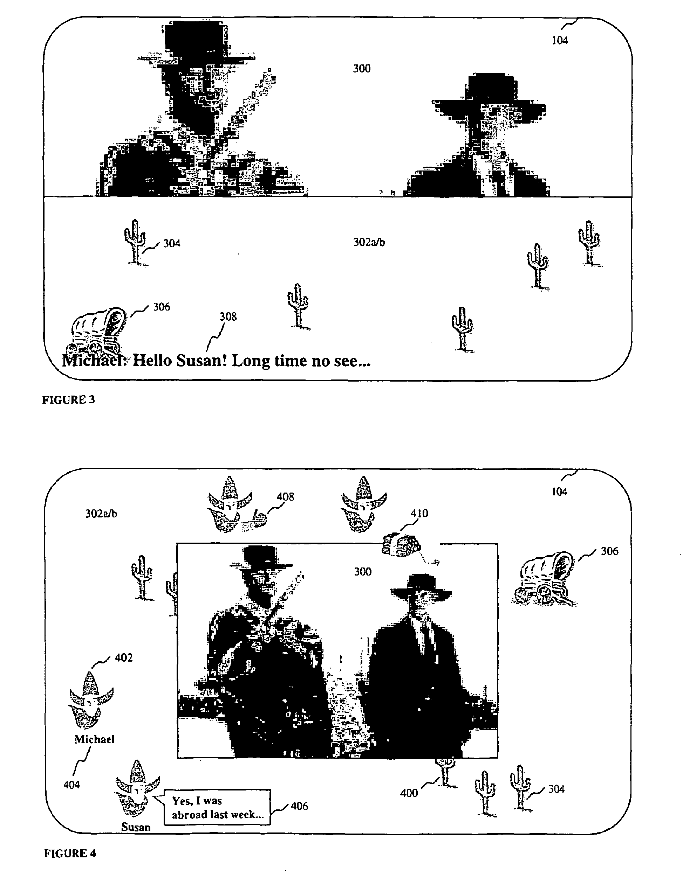

The multimedia apparatus 100 is shown in more detail in Figure 2. The multimedia apparatus 100 includes a central processor unit (CPU) 200, an input output (I/O) unit 202, a memory 204 that stores data and various programs such as an operating system 206 and one or more application programs 208, and a hard disk drive 210 that provides non-volatile storage of computer-readable instructions, data structures, such as an image database 212, program modules and other data.

The multimedia apparatus 100 further includes a transport stream parser 214 for receiving satellite, cable or terrestrial transmissions in digital MPEG-2 format from e.g. a dish antenna 216. The transport stream parser 214 recovers signal formatting information. A selected channel from the real-time transmission is fed to a conventional video decoder 218, which converts digital signals into a suitable RF modulated form to be supplied to an aerial socket of a conventional television set. These components are interconnected by common bus 220 in a manner well known per se. The bus 220 may be any of several types of bus structures such as a memory bus, a peripheral bus or a local bus.

Access to the Internet is provided through the input output (I/O) unit 202 and the bi-directional communications link 110, e.g. via the telephone network 222. The display 104 is also connected to the bus 220 via a interface 224 such as a video adapter.

The multimedia apparatus 100 provides a television chat functionality to the user by activating an application program 208 stored in the memory 204. This functionality is accomplished by receiving a broadcast video signal 108 and displaying the television program on the display 104 together with text communications, hereafter referred to as chat communications, received from other television viewers either via the bi-directional communications link 110 or together with the broadcast video signal 108. In the latter case the chat communications are multiplexed into the broadcast stream. Further, the user is able to send own text comments to the chat service provider via the input output (I/O) unit 202 and e.g. the telephone network 222. The television program may be shown in a diminished size or part of the available television image may not be shown at all. In Figure 3 the television program is shown in a television display area 300 occupying the top half of the display 104 and the chat communications is shown in a chat display area 302a.

Figure 3 further depicts a chat background 302b, consisting of five cactuses 304 and one wagon 306, that coincides with the chat display area 302a. The chat communications 308 is superimposed on the chat background 302b. The background image can have a size which is adapted to a certain setting of the television display area 300 and the chat display area 302a, such as full length and half the height. However, the background image is preferably a full length and a full height sized image so that it can be used in any type of setting. In Figure 4 the use of a full size image is shown where a part of the image has been removed to fit the setting, and as a result all items, e.g. cactus 400, are not completely visible.

In the preferred embodiment, the image database 212 is downloaded to the multimedia apparatus 100 and stored in the hard disk drive 210 prior to employing the invention. During chat a suitable image is selected and displayed as a chat background 302b in the chat display area 302a. In another embodiment the image database 212 is residing on the Internet and suitable background images are downloaded when needed and temporarily stored in the memory 204 or in the hard disk drive 210.

In yet another embodiment, when the chat communications is multiplexed into the broadcast stream and received together with the broadcast video signal 108, the chat service provider will send suitable background images from the chat server in the broadcast stream.

The chat functionality is further enhanced by matching the chat background 302b to the theme of the television program shown in the television display area 300. In the preferred embodiment this is achieved in the following way; the channel watched by the user is determined in a manner well known per se, an electronic program guide inherent in the multimedia apparatus 100 is consulted to retrieve the identity of the television programming, available guide data about the television program is used to determine its theme and the background image that best matches the theme is selected to be displayed in the chat display area 302a. In another embodiment the channel watched by the user is determined in a manner well known per se and transmitted over the input output (I/O) unit 202 and the bi-directional communications link 110 to the chat server where the identity and theme of the television programming are determined so that an instruction, for selecting the most appropriate background image, can be returned.

The chat background 302b may be replaced one or more times during the duration of a single television program. In the preferred embodiment the multimedia apparatus 100 will receive a trigger to replace the present background image with a new one. The trigger is provided by the chat server together with the chat communications 308. In another embodiment there is a timer function inherent in the multimedia apparatus 100 that automatically changes the chat background 302b after a predetermined amount of time has elapsed. In yet another embodiment the user can change the chat background 302b himself or herself whenever desirable.

Figure 4 depicts four avatar images 402 displayed in the chat display area 302a superimposed on the chat background 302b. An avatar is a graphical representation of a physical person in a virtual environment. Avatar images 402 are stored in the image database 212 together with the background images. Each avatar image 402 displayed in the chat display area 302a represents one chat participant. The same avatar graphic can be used for all chat participants but preferably there will be a number of avatar graphics to choose between. The user will choose an avatar image 402 from a gallery and this selection is forwarded to the chat server together with the chat communications of the user. The avatar selection is then distributed to other chat participants together with the chat communications in order for the user to be correctly represented.

There may be name tags 404 displayed close to the avatar images 402 in order to identify the chat participants. Instead of displaying the chat communications 308 on consecutive lines in the chat display area 302a as shown in Figure 3, the text communications may, according to the invention, be displayed close to the avatar image 402 representing the chat participant who made the comment. Figure 4 depicts the preferred embodiment when a chat communication 308 is displayed in a callout box 406. Since there is no longer any need to scroll the messages in the chat display area 302a, a chat communication 308 can remain visible in the callout box 406 until a new chat communication 308 from the same chat participant.

The invention makes it possible for chat participants to perform actions. All possible actions are predefined in the application program 208 running the chat functionality on the multimedia apparatus 100. Action images 408, 410 are stored in the image database 212. In practice, an action image 408, 410 can be several images that replace each other in order to give the effect of animation, such as an animated picture similar to those found on the Internet, or it can be one single image that moves across the display. Once a user performs an action, the selected action is forwarded to the chat server together with the chat communications of the user. The action selection is then distributed to other chat participants together with the chat communications in order for the action to be correctly represented. Normally, action images 408 are portrayed within the boundaries of the chat display area 302a. However, the invention can also be implemented to allow action images 410 to be portrayed in the television display area 300. In the latter case it may be necessary to make the action image transparent so that it does not block television viewing entirely in the area where it is portrayed.

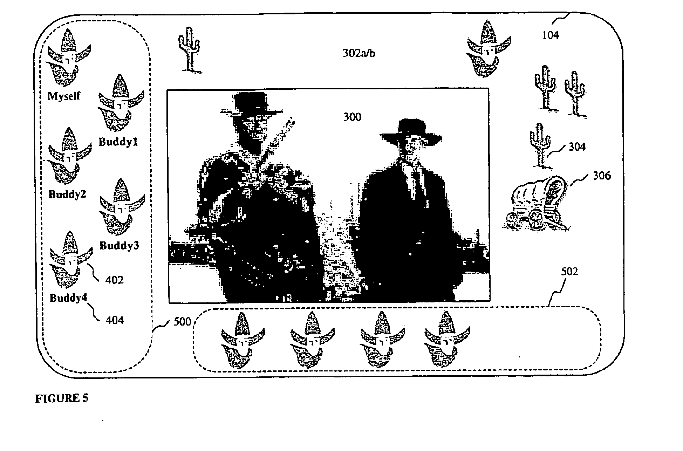

Finally, according to another aspect of the invention, a record of favourite chat friends can be created by the user of the multimedia apparatus 100. The record will be stored in the memory 204 or in the hard disk drive 210. Chat communications 308 received from chat participants included in the record of favourite chat friends will always be displayed. Optionally, there may be a VIP (very important person) section 500, as shown in Figure 5, in the chat display area 302a where avatar images 402 of chat friends are displayed. It deserves to be pointed out that the multimedia apparatus 100 may receive chat communications 308 from more chat participants than are superimposed on the chat background 302b. When the application program 208 providing the chat functionality receives a chat communication 308, it will determine if the identity of the chat participant who sent the chat communication 308 matches the identity of any of the avatar images 402 displayed. If there is a match then the chat communication 308 will be displayed, but otherwise it will be discarded. Some of the avatar images 402 displayed will not be included in the record of favourite chat friends. Optionally, there may be a main section 502, as shown in Figure 5, in which such avatar images 402 are displayed.

The chat friends included in the favourite record do not need to watch the same television program as the user of the multimedia apparatus 100 in order for their chat communications 308 to be displayed. The advantage is that the user does not have to bother about finding out in which chat room his or her friends are located and the user can switch between television programs without loosing contact with them. Further, the chat friend may recommend the user to switch to whatever program the chat friend is watching. If, however, the chat friends are not online, their avatar images 402 may be depicted in black and white only, or in another suitable way, to indicate that they are not chatting at the moment. All other avatar images 402, e.g. those in a main section 502, preferably belong to active chat participants that watch the same television program as is being displayed in the television display area 300. However, the record of favourite chat friends is an individual record. Even if "Michael" is a chat favourite of "Susan's" it does not make "Susan" a chat favourite of "Michael's". The record can be continuously updated by the user.

There can also exist a change option. If the user of the multimedia apparatus 100 becomes bored with one or more of the chat participants he or she may replace one or more of them. By triggering the change option the application program 208 will remove any given number of avatar images 402 and replace them with new avatar images 402 representing other chat participants. For example, if a chat room has 100 participants and the chat interface can only display 20 participants in the main section 502, then there is clearly room for replacing the avatar images 402 a couple of times in order to find new friends. Preferably, the user should be able to select which avatar images 402 that will be replaced before triggering the change option. It is obvious from what is said above that a message from one participant in a chat room is not automatically echoed to all of the participants in the same chat room.

While the invention has been particularly shown and described with reference to preferred embodiments thereof, it will be understood by those skilled in the art that the foregoing and other changes in form and detail may be made therein without departing from the scope of the invention.

## Claims

1. A method for providing a graphical chat user interface on a display associated with a multimedia apparatus, comprising the steps of:
receiving a broadcast video signal;
receiving text communications from at least one other television viewer;
displaying said broadcast video signal in a first display area on said display;
determining the identity of the television programming displayed in said first display area;
determining the theme of said television programming identity;
selecting a background image from an image database, said background image matching said theme;
inserting said background image as a background in a second display area on said display ; and -
superimposing said text communications on top of said background image in said second display area.

2. The method of claim 1, further comprising the steps of:
selecting at least one avatar image from said image database, said at least one avatar image being representative of one of said other television viewers; and
displaying said at least one avatar image superimposed on top of said background image in said second display area.

3. The method of claim 1 or 2, wherein the steps of selecting a background image from an image database, said background image matching said theme and inserting said background image as a background in a second display area on said display are performed at least two times during the broadcast of said television programming.

4. The method of claim 1 or 2, wherein said image database is residing in a memory device associated with said multimedia apparatus, or wherein said image database is residing on the Internet.

5. The method of claim 1 or 2, further comprising the step of:
downloading said image database via the multiplexed broadcast stream containing said broadcast video signal.

6. The method of claim 2, wherein said text communications received from said one of said other television viewers remains superimposed on top of said background image in said second display area close to the displayed said at least one avatar image, optionally until another text communications is received from said one of said other television viewers.

7. The method of claim 2, further comprising the steps of:
receiving an action input from at least one television viewer associated with one avatar image currently displayed in said second display area;
selecting at least one action image from said image database, said at least one action image corresponding to said action input; and
displaying said at least one action image superimposed on top of:
a) said background image in said second display area, or
b) said television programming in said first display area, optionally transparently superimposed on top of said television programming in said first display area.

8. The method of claim 2, further comprising the steps of:
creating at least one record associated with said multimedia apparatus, said at least one record comprising a list of preferred other television viewers; and
superimposing text communications and displaying at least one avatar image associated with at least one other television viewer included in said record, and superimposing text communications and displaying at least one avatar image associated with at least one other television viewer not included in said record.

9. The method of claim 8, wherein said at least one other television viewer not included in said record is watching television programming determined to have the same television programming identity as the television programming displayed in said first display area.

10. The method of claim 9, further comprising the steps of:
receiving a change input from the television viewer associated with said multimedia apparatus;
replacing the avatar image of at least one other television viewer with an avatar image of at least one other television viewer based on said change input.

11. A multimedia apparatus comprising
a first receiving means for receiving a broadcast video signal,
a second receiving means for receiving text communications originating from a plurality of multimedia apparatuses, and for receiving a plurality of images, a memory means for storing said plurality of images,
a determination means for determining the identity of the television programming tuned to by said first receiving means, and for determining the theme of said television programming identity,
a display means for displaying said broadcast video signal in a first display area, for displaying a background image, retrieved from said memory means and matching said theme, in a second display area, and for displaying said text communications superimposed on said background image in said second display area.

12. The multimedia apparatus of claim 11, wherein said display means also are arranged for displaying a plurality of avatar images, retrieved from said memory means and each avatar image corresponding to one of said plurality of multimedia apparatuses, superimposed on said background image in said second display area.

13. The multimedia apparatus of claim 12, wherein said second receiving means also are arranged for receiving an action input from one of said plurality of multimedia apparatuses associated with an avatar image currently displayed in said second display area, and said display means also are arranged for displaying an action image, retrieved from said memory means and corresponding to the character of said action input, superimposed on said background image in said second display area.

14. A computer program product, directly loadable into the internal memory of a digital computer, comprising software code portions for performing the method of any of claims 1 to 10 when said product is run on a computer.

## Patentansprüche

1. Verfahren zum Bereitstellen einer grafischen Chat-Nutzer-Schnittstelle auf einer Anzeige, die mit einer Multimedia-Vorrichtung verknüpft ist, aufweisend die Schritte:
- Empfangen eines Funk-Videosignals;
- Empfangen von Text-Kommunikation von wenigstens einem anderen Fernseh-Betrachter;
- Anzeigen des Funk-Videosignals in einem ersten Anzeigebereich auf der Anzeige;
- Bestimmen der Identität des Fernseh-Programms, das in dem ersten Anzeigebereich angezeigt wird;
- Bestimmen des Themas der Fernseh-Programm-Identität
- Auswählen eines Hintergrundbildes aus einer Bild-Datenbank, wobei das Hintergrundbild mit dem Thema übereinstimmt;
- Einfügen des Hintergrundbildes als ein Hintergrund in einem zweiten Anzeigebereich auf der Anzeige;
- Überlagern der Text-Kommunikationen über dem Hintergrundbild in dem zweiten Anzeigebereich.

2. Verfahren nach Anspruch 1, ferner aufweisend die Schritte:
- Auswählen wenigstens eines Avatar-Bildes aus der Bild-Datenbank, wobei das wenigstens eine Avatar-Bild einen der anderen Fernseh-Betrachter darstellt; und
- Anzeigen des wenigstens einen Avatar-Bildes, das über dem Hintergrund-Bild der zweiten Anzeige im zweiten Anzeigebereich überlagert ist.

3. Verfahren nach Anspruch 1 oder 2, wobei die Schritte des Auswählens eines Hintergrund-Bildes aus einer Bild-Datenbank, der Hintergrund-Bild-Übereinstimmung mit dem Thema und des Einfügens des Hintergrund-Bildes als ein Hintergrund in einem zweiten Anzeigebereich auf der Anzeige ausgeführt werden, wenigstens einmal während der Funk-Sendung des Fernseh-Programms.

4. Verfahren nach Anspruch 1 oder 2, wobei die Bild-Datenbank in einer Speichervorrichtung liegt, die mit der Multimedia-Vorrichtung verknüpft ist, oder wobei die Bild-Datenbank auf dem Internet liegt.

5. Verfahren nach Anspruch 1 oder 2, ferner aufweisen den Schritt:
- Herunterladen der Bilddatenbank über den gemultiplexten Funkstrom, der das Funk-Videosignal enthält.

6. Verfahren nach Anspruch 2, wobei die Text-Kommunikation, die erhalten wird von dem einen der anderen Fernseh-Betrachter, überlagert bleibt über dem Hintergrundbild in dem zweiten Anzeigebereich nahe zu dem angezeigten wenigstens einen Avatar-Bild, optional bis weitere Text-Kommunikationen erhalten werden von dem einen der anderen Fernsehbetrachter.

7. Verfahren nach Anspruch 2, aufweisend die Schritte:
- Empfangen eines Aktionseingangs von wenigstens einem Fernseh-Betrachter, der mit einem Avatar-Bild verknüpft ist, das derzeit in dem zweiten Anzeigebereich angezeigt wird;
- Auswählen wenigstens eines Aktionsbildes aus der Bilddatenbank, wobei das wenigstens eine Aktionsbild dem Aktions-Eingang entspricht; und
- Anzeigen des wenigstens einen Aktionsbildes, das überlagert ist über:
a) dem Hintergrundbild in dem zweiten Anzeigebereich oder
b) dem Fernseh-Programm in dem ersten Anzeigebereich, und zwar optional transparent überlagert ist über das Fernseh-Programm in dem ersten Anzeigebereich.

8. Verfahren nach Anspruch 2, ferner aufweisend die Schritte:
- Erzeugen wenigstens eines Eintrags, der mit der Multimedia-Vorrichtung verknüpft ist, wobei der wenigstens eine Eintrag eine Liste von bevorzugten anderen Fernseh-Betrachtern aufweist; und
- Überlagern von Text-Kommunikation und Anzeigen wenigstens eines Avatar-Bildes, das mit wenigstens einem anderen Fernseh-Betrachter verknüpft ist, der in dem Eintrag enthalten ist und Überlagern von Text-Kommunikationen und Anzeigen wenigstens eines Avatar-Bildes, das mit wenigstens einem anderen Fernsehbetrachter verknüpft ist, der nicht in dem Eintrag enthalten ist.

9. Verfahren nach Anspruch 8, wobei der wenigstens eine Fernseh-Betrachter, der nicht enthalten ist in dem Eintrag, das Fernseh-Programm betrachtet, das bestimmt wurde, dieselbe Fernseh-Programm-Identität zu haben wie das Fernseh-Programm, das in dem ersten Anzeigebereich angezeigt ist.

10. Verfahren nach Anspruch 9, ferner aufweisend die Schritte:
- Empfangen eines Änderungseingangs von dem Fernseh-Betrachter, verknüpft mit der Multimedia-Vorrichtung;
- Ersetzen des Avatar-Bildes von wenigstens einem weiteren Fernseh-Betrachter mit einem Avatar-Bild wenigstens eines weiteren Fernseh-Betrachters, bezogen auf den Änderungseingang.

11. Multimedia-Vorrichtung, aufweisend:
- eine erste Empfangseinrichtung zum Empfangen eines Funk-Video-Signals,
- eine zweite Empfangseinrichtung zum Empfangen von Text-Kommunikationen, die von einer Vielzahl von Multimedia-Vorrichtungen stammen, und zum Empfangen einer Vielzahl von Bildern, eine Speichereinrichtung zum Speichern der Vielzahl von Bildern,
- eine Bestimmungseinrichtung zum Bestimmen der Identität des Fernseh-Programms, das eingestellt wurde durch die erste Empfangseinrichtung, und zum Bestimmen des Themas der Fernseh-Programm-Identität,
- eine Anzeigeeinrichtung zum Anzeigen des Funk-Videosignals in einem ersten Anzeigebereich, zum Anzeigen eines Hintergrundbildes, das aus der Speichereinrichtung abgerufen ist und mit dem Thema übereinstimmt, und zwar in einem zweiten Anzeigebereich zum Anzeigen der Text-Kommunikation, die auf dem Hintergrund-Bild in dem zweiten Anzeigebereich überlagert sind.

12. Multimedia-Vorrichtung nach Anspruch 11, wobei die Anzeige-Einrichtung auch angeordnet ist zum Anzeigen einer Vielzahl von Avatar-Bildern, die aus der Speichereinrichtung abgerufen werden und wobei jedes Avatar-Bild einem der Vielzahl der Multimedia-Vorrichtungen entspricht, überlagert über dem Hintergrund-Bild in dem zweiten Anzeigebereich.

13. Multimedia-Vorrichtung nach Anspruch 12, wobei die zweite Empfangseinrichtung auch angeordnet ist zum Empfangen eines Aktionseingangs von einem der Vielzahl von Multimedia-Vorrichtungen, die mit einem Avatar-Bild verknüpft sind, das derzeit in dem zweiten Anzeigebereich angezeigt wird, und die Anzeigeeinrichtung auch angeordnet ist zum Anzeigen eines Aktionsbilds, abgerufen von der Speichereinrichtung und entsprechend dem Charakter des Aktionseingangs, überlagert über dem Hintergrund-Bild in dem zweiten Anzeigebereich.

14. Computerprogramm-Produkt, direkt ladbar in den internen Speicher eines digitalen Computers, aufweisend Software-Code-Abschnitte zum Ausführen des Verfahrens von einem der Ansprüche 1 bis 10, wenn das Produkt auf einem Computer abläuft.

## Revendications

1. Procédé destiné à fournir une interface d'utilisateur de discussion graphique sur un dispositif d'affichage associé à un dispositif multimédia, comprenant les étapes consistant à :
recevoir un signal vidéo de diffusion,
recevoir des communications de texte provenant d'au moins un autre téléspectateur,
afficher ledit signal vidéo de diffusion dans une première zone d'affichage sur ledit dispositif d'affichage,
déterminer les identités du programme de télévision affichée dans ladite première zone d'affichage,
déterminer le thème de ladite identité du programme de télévision,
sélectionner une image d'arrière-plan à partir d'une base de données d'images, ladite image d'arrière-plan correspondant audit thème,
insérer ladite image d'arrière-plan en tant qu'arrière-plan dans une seconde zone d'affichage sur ledit dispositif d'affichage, et
superposer lesdites communications de texte au-dessus de l'image d'arrière-plan dans ladite seconde zone d'affichage.

2. Procédé selon la revendication 1, comprenant en outre les étapes consistant à :
sélectionner au moins une image d'avatar à partir de ladite base de données d'images, ladite au moins une image d'avatar étant représentative de l'un desdits autres téléspectateurs et
afficher ladite au moins une image d'avatar superposée au-dessus de ladite image d'arrière-plan dans ladite seconde zone d'affichage.

3. Procédé selon la revendication 1 ou 2, dans lequel les étapes consistant à sélectionner une image d'arrière-plan à partir d'une base de données d'images, ladite image d'arrière-plan correspondant audit thème et à insérer ladite image d'arrière-plan en tant qu'arrière-plan dans une seconde zone d'affichage sur ledit dispositif d'affichage sont exécutées au moins deux fois au cours de la diffusion dudit programme de télévision.

4. Procédé selon la revendication 1 ou 2, dans lequel ladite base de données d'images réside dans un dispositif de mémoire associé audit dispositif multimédia, ou dans lequel ladite base de données d'images réside sur le système Internet.

5. Procédé selon la revendication 1 ou 2, comprenant en outre l'étape consistant à :
télécharger ladite base de données d'images par l'intermédiaire du flux de diffusion multiplexé contenant ledit signal vidéo de diffusion.

6. Procédé selon la revendication 2, dans lequel lesdites communications de texte reçues à partir de l'un desdits autres téléspectateurs restent superposées au-dessus de ladite image d'arrière-plan dans ladite seconde zone d'affichage à proximité de ladite au moins une image d'avatar affichée, et éventuellement jusqu'à ce que d'autres communications de texte soient reçues à partir dudit un desdits autres téléspectateurs.

7. Procédé selon la revendication 2, comprenant en outre les étapes consistant à :
recevoir une entrée d'action d'au moins un autre téléspectateur associé à une image d'avatar actuellement affichée dans ladite seconde zone d'affichage,
sélectionner au moins une image d'action à partir de ladite base de données d'images, ladite au moins une image d'action correspondant à ladite entrée d'action, et
afficher ladite au moins une image d'action superposée au-dessus de :
a) ladite image d'arrière-plan dans ladite seconde zone d'affichage, ou
b) ledit programme de télévision dans ladite première zone d'affichage, éventuellement superposée de manière transparente au-dessus dudit programme de télévision dans ladite première zone d'affichage.

8. Procédé selon la revendication 2, comprenant en outre les étapes consistant à :
créer au moins un enregistrement associé audit dispositif multimédia, ledit au moins un enregistrement comprenant une liste d'autres téléspectateurs préférés, et
superposer des communications de texte et afficher au moins une image d'avatar associée à au moins un téléspectateur inclus dans ledit enregistrement, et superposer des communications de texte et afficher au moins une image d'avatar associée à au moins un autre téléspectateur non inclus dans ledit enregistrement.

9. Procédé selon la revendication 8, dans lequel ledit au moins autre téléspectateur non inclus dans ledit enregistrement regarde le programme de télévision déterminé comme ayant la même identité de programme de télévision que le programme de télévision affiché dans ladite première zone d'affichage.

10. Procédé selon la revendication 9, comprenant en outre les étapes consistant à :
recevoir une entrée de changement provenant du téléspectateur associé audit dispositif multimédia,
replacer l'image d'avatar d'au moins un autre téléspectateur par une image d'avatar d'au moins un autre téléspectateur sur la base de ladite entrée de changement.

11. Dispositif multimédia comprenant
un premier moyen de réception destiné à recevoir un signal vidéo de diffusion,
un second moyen de réception destiné à recevoir des communications de texte ayant pour origines une pluralité de dispositifs multimédias, et destiné à recevoir une pluralité d'images, un moyen de mémoire destiné à mémoriser ladite pluralité d'images,
un moyen de détermination destiné à déterminer l'identité du programme de télévision sur lequel ledit premier moyen de réception est réglé, et destiné à déterminer le thème de ladite identité de programme de télévision,
un moyen d'affichage destiné à afficher ledit signal vidéo de diffusion dans une première zone d'affichage, afin d'afficher une image d'arrière-plan, récupérée à partir dudit moyen de mémorisation et correspondant audit thème, dans une seconde zone d'affichage, et destiné à afficher lesdites communications de texte superposées sur ladite image d'arrière-plan dans ladite seconde zone d'affichage.

12. Dispositif multimédia selon la revendication 11, dans lequel ledit moyen d'affichage est également agencé pour afficher une pluralité d'images d'avatar, récupérées à partir dudit moyen de mémoire et chaque image d'avatar correspondant à l'un de ladite pluralité de dispositifs multimédias, superposées sur ladite image d'arrière-plan dans ladite seconde zone d'affichage.

13. Dispositif multimédia selon la revendication 12, dans lequel ledit second moyen de réception est également agencé pour recevoir une entrée d'action à partir d'un dispositif de ladite pluralité de dispositifs multimédias associés à une image d'avatar actuellement affichée dans ladite seconde zone d'affichage, et ledit moyen d'affichage est également agencé pour afficher une image d'action, récupérée à partir dudit moyen de mémorisation et correspondant au personnage de ladite entrée d'action, superposée sur ladite image d'arrière-plan dans ladite zone d'affichage.

14. Produit de programme informatique, pouvant être directement chargé dans la mémoire interne d'un ordinateur numérique, comprenant les parties de code de logiciel destinées à exécuter le procédé de l'une quelconque des revendications 1 à 10 lorsque ledit produit est exécuté sur un ordinateur.
